# EUROPEAN PATENT SPECIFICATION

(11) **EP 3 194 510 B1**
(45) Date of publication and mention of the grant of the patent: **30.01.2019**
(21) Application number: 15837527.9
(22) Date of filing: 26.08.2015
(51) Int. Cl.: C09D 5/16

(54) **A METHOD FOR TREATING SURFACES ON MARINE OBJECTS WITH ANTI-FOULING PAINT**
VERFAHREN ZUR OBERFLÄCHENBEHANDLUNG AUF MEERESOBJEKTEN MIT FÄULNISVERHINDERNDEM ANSTRICH
PROCÉDÉ DE TRAITEMENT DE SURFACES SUR DES OBJETS MARINS À L'AIDE D'UNE PEINTURE ANTI-ENCRASSEMENT

(30) Priority: 05.09.2014 US 201462046228 P
(43) Date of publication of application: 26.07.2017
(73) Proprietor: Ekomarine Paint Inc., Southern Pines, North Carolina 28387 (US)
(72) Inventor: HAEFFNER, Mikael, 647 91 Mariefred (SE); EKSTRAND, Henrik, 113 44 Stockholm (SE)
(74) Representative: Burkard, Thierry
(86) International application number: PCT/US2015/046864
(87) International publication number: WO 2016/036550

(56) References cited:
- CN-A- 1 314 324
- CN-A- 1 810 903
- US-A- 3 350 211
- US-A- 3 963 601
- US-A- 5 200 236
- US-A- 6 069 189
- US-A1- 2013 195 948
- US-A1- 2014 058 011
- US-A1- 2014 155 530
- US-B2- 6 705 115

## Description

### Field Of The Invention

The present invention relates to method for treating surfaces on marine objects, such as boat hulls, with a non-toxic and environmentally friendly anti-fouling paint.

### Background And Summary Of The Invention

Some vessels suffer severely from the growth of undesirable organisms on the boat hull. This is called fouling. Conventional anti-fouling paints are formulated with toxic copper and tin compounds, or other biocides that are specially designed to slow down the growth of barnacles and other marine organisms on bottom hulls of boats and other marine objects. The negative effects of these toxic chemicals are well documented and hence there is a strong desire for improved paint formulations that are not detrimental to the environment.

Antifouling paints are primarily characterized by a mechanism that changes the surface properties of the underlying object, e.g. making the surface slippery to reduce its surface tension and preventing organisms from attaching to the surface. This is referred to as the physical effect of the antifouling solution. For example, the use of carbon particles (or activated charcoal) in paint formulations may make the surface of the object hydrophobic and prevent the attachment of fouling organisms. Alternatively, and in most of cases, the above solution does not provide sufficient or satisfying results and the antifouling coatings are generally formulated to contain biocides of organic compounds and/or inorganic salts, such as organo-halogenated compounds and copper, tin or zinc salts, respectively. This is generally referred to as the chemical effect of the antifouling coating. Due to increasing environmental and health concerns in the community/society, authorities are limiting, and sometimes banning, the use of toxic additives to antifouling paint although the substances, such as biocides and pesticides, have proven chemical antifouling properties because they are thought to pose a risk to human health and the environment.

Certain anti-fouling paints have been formulated with non-toxic additives, such as wheat-gluten and starch, because they have been found to reduce the tendency or ability of undesirable marine organisms to attach to the surface of the coated substrates. However, the currently available non-toxic additives have in general low effects due to difficulties in controlling the speed of exposure and thereby making it difficult to predict the durability of the additive. The non-toxic additives are also often too vulnerable to changes in water conditions such as pH, temperature and salinity.

There is still a need for an effective non-toxic antifouling paint because the prior solutions have all proven to be inadequate in one way or another.

The present invention solves the problems outlined above. The present invention relates to an antifouling paint that contains environmentally acceptable substances that are effective in suppressing the ability of marine organisms, such as mollusks and barnacles, to attach to surfaces treated with the novel antifouling paint. More particularly, the present invention relates to an antifouling paint that includes a binder and a formulation containing a porous silicate such as calcium magnesium silicate (PCMS), in combination with a sterol-ester wax additive, such as lanolin, which contains no toxic or environmentally detrimental chemicals.

The present invention is partly based on the surprising discovery of an environmentally friendly solution that provides sufficient antifouling physical effect when formulated as described herein. The non-toxic formulation of the present invention matches the performance and sometimes even outperforms prior art solutions while at the same time:
a) Avoids the use of biocides, such as salts and especially the very toxic tributyltin (TBT), that, although being effective, are unacceptable from an environment preservation perspective;
b) Eliminates the need for using protective gear (during its application) because the paint is non-toxic; and
c) Does not release toxic or pollutants to the environment during the manufacturing process.

The method for treating a surface of a marine object exposed to seawater with an antifouling paint. An antifouling paint is provided that comprises a porous silicate and a wax. The porous silicate has a particle size of between 1 and 100 µm and is in a concentration of between 18 and 60 weight percent. An inside of the porous silicate is partially loaded with binders and solvents while permitting the porous silicate to release ions from the inside of the porous silicate. The porous silicate is permitted to release ions when in contact with seawater. The wax is applied to an external surface of the porous silicate to encapsulate the porous silicate so that the wax slows down but not prevent the release of ions from the porous silicate. The antifouling paint is applied to a surface of the marine object. The released ions provides an anti-fouling effect on the surface of the marine object exposed to seawater.

The method further comprises the step of providing a porous calcium silicate.

The method further comprises the step of providing a porous magnesium silicate.

The method further comprises the step of providing a porous calcium magnesium silicate.

The method further comprises the step of providing lanolin.

The method further comprises the step of using the porous silicate to release ions and using the wax to slow-down the release of ions.

The method further comprises the step of using the porous silicate to create a hydrophilic and acidic rough surface of the antifouling paint.

The method further comprises the step of using lanolin to create a waxy surface of the antifouling paint.

The method further comprises the step of using a sterol-ester.

The method further comprises the step of using the porous silicate in a concentration of between 28 and 52 weight percent.

The method further comprises the step of using calcium in an atomic concentration of between 1 and 15% and magnesium of between 1 and 15% with respect to the porous silicate.

The method further comprises using a porous silicate having a density of between 0.05 and 0.4 gram/cm³.

The method further comprises the using of a porous silicate having a surface area of between 50 and 300 m²/gram.

The method further comprises the using of a porous silicate having a pore size between 10 and 80 nm.

The method further comprises the using of a porous silicate having a pore size about 20 nm.

### Brief Description Of The Drawings

Fig. 1 is a schematic view of the mixing process of the antifouling paint of the present invention;
Fig. 2 is a schematic view of the functions of the silicate and wax in the antifouling paint of the present invention; and
Fig. 3 is a schematic view of the synergistic interaction between the porous silicate and the wax of the present invention.

### Detailed Description

The method of the present invention includes the use of a hydrophilic non-toxic paint formulation that is easily applied. One important feature of the paint formulation is that the active antifouling ingredients have a surprising and unexpected synergistic effect which has not previously been observed or used. The novel paint formulation provides a significantly better antifouling effect although the formulation is non-toxic or substantially non-toxic, as described in more detail below. The paint formulation includes a suitable non-toxic wax (or sterol-ester), such as lanolin or its derivatives, in combination with a suitable porous inorganic solid such as silicate that provides support to the wax. The porous silicate thus functions both as a barrier and as mechanical support for the wax impregnated/supported on and inside the surface of the porous silicate. The porous silicate is thus loaded with lanolin. Calcium magnesium silicate is a suitable silicate.

As mentioned above, the combination of the porous calcium magnesium silicate particles and the sterol-ester additive has an effective synergistic effect on the anti-fouling properties of the resulting paint, as described in detail below. The paint is preferably used to prevent marine organisms such as barnacles, encrusting bryozoans, mollusks, polychaete and other tube worms and zebra mussels from attaching to surfaces of the marine object.

Although both porous and non-porous silicate may be used, porous silicate is preferred because it provides many important functions. The wax impregnates/wets the silicate providing support for the lanolin additive thereby acting as a support that slows down the release of the wax, such as lanolin, to the external aqueous surface. The supporting function of the silicate thus prolongs the durability of the lanolin compared to formulations that do not contain the porous silicate matrix.

Secondly, the porous silicate creates a hydrophilic and acidic rough surface at the interface between the silicate and the wax phase. In other words, because the addition of the porous and/or small silica particles produces a micron-scale roughness this increases the surface area and hence the loading capability of lanolin is enhanced.

Thirdly, when exposed to seawaters, the silicate releases, partly due to the pH of seawater, divalent cations (such as calcium and magnesium ions). This release reduces the adhesion of marine fouling organisms to the coated surface without being toxic to the organisms. The release of divalent cations (calcium and/or magnesium) is believed to interfere with the adhesion mechanism because the protein used by barnacles for adhering to surfaces prefers adhering to the calcium ions instead of to the surface. When the silicate dissolves, the barnacles that are attached to calcium ions are released from the surface. Another mechanism is that calcium regulates the segregation of protein by the barnacles and thus the presence of calcium in the silicate interferes with this process.

Lanolin slows down the release of divalent cations and this is advantageous because it prolongs the release of ions so that this feature of the silicate lasts longer. In this way, lanolin covers the silicate and reduces its exposure to water, which in turn, slows down the dissolution process and hence the calcium/magnesium release.

Suitable silicate materials include:
a) Porous and non-porous calcium magnesium silicate having a particle size of between 1 and 100 pm, preferably between 15 and 60 µm.
b) Porous and non-porous calcium silicate having a particle size of between 1 and 100 µm, preferably between 15 and 60 µm.
c) Porous and non-porous magnesium silicate having a particle size of between 1 and 100 µm, preferably between 15 and 60 µm.
d) Hydrophilic fumed silica having a porosity characteristic between 120 to 230 square meters per gram and a particle size of between 1 and 100 pm, preferably between 15 and 60 µm.

The porous silicate is, preferably, in concentrations between 18 and 60 weight percent compared to the total weight, preferably between 28 and 52 weight percent. The porous silicate concentration is relatively high despite the risk of exceeding the critical particle concentration that may make the paint adhere worse and behave more like a powder due to lack of enough binder material. One reason why it is possible to use high concentrations of silicate is the fact that the silicate is porous and can be loaded or impregnated with other substances such as wax and binders, as described in detail below. More preferably, the porous silicate is a porous calcium magnesium silicate wherein calcium is present in atomic concentrations in the range of 1 to 15 % and the magnesium is present in atomic concentrations in the range of 1 to 15 %. The porous silicate may have densities between 0.05 to 0.4 gram/cm³; surface area 50 to 300 m²/gram preferably 200 m²/gram and pore size between 10 and 80 nm, preferably 20 nm.

The antifouling paint formulation may include or be derived from calcium salts such as calcium carbonate, calcium phosphate or calcium sulfate.

The antifouling paint formulation may include or be derived from magnesium salts, such as magnesium carbonate, magnesium phosphate and/or magnesium sulfate.

The non-toxic wax may include sterol-esters, acylated sterol-esters or alkoxylated sterol-esters, such as lanolin and its acylated or alkoxylated derivatives may be used.

The non-toxic wax also provides many important functions. The wax changes the rheological properties of the paint layer by creating a waxy outer layer on the surface of the paint. This waxy outer layer acts as a suppressor of the attachment of marine fouling organisms. The wax also slows down the release of non-toxic ions from the silicate particles. This is an important synergistic effect when, for example, combining lanolin with a porous calcium magnesium silicate (PCMS).

A wide range of binders may be used. Suitable binders include hygroscopic gum resin such as Bremazit 5015 supplied by Kraemer GmbH. The active ingredients are compatible with hygroscopic and hydrophilic binders of the paint which facilitates the formulation, storage and production of the paint. An additional advantage of hydrophobic and/or hydrophilic binders is that they significantly reduce or even eliminate the need for using undesirable volatile organic solvents (VOC).

Other additives may also be used such as lanolin and its derivatives; other sterol-esters; other sterols; other esters; and other high molecular weight alcohols and poly-alcohols.

A wide range of pigments may be used in the paint. Suitable pigments include carbon black for black color; iron oxide for red color; and cobalt blue for blue color.

A wide range of primers may be used. The use of a primer is particularly important when a hydrophilic antifouling paint is used because it does not adhere well to a hydrophobic surface, such as a boat-hull surface made of fiberglass or metal, without using a primer that is semi-hydrophobic or semi-hydrophilic. A suitable primer is Pliolite supplied by Eliokem. It is also preferred to use a hydrophilic antifouling paint so that there is interaction between the wax (lanolin) and the water into which the marine object is immersed.

The silicate/sterol-ester weight ratio is between 1 and 5, preferably between 1.5 and 3.5. If too much lanolin is used then the paint formulation becomes too soft and wears out sooner because the lanolin is released faster (due to insufficient silicate that reduces such lanolin release) into the water.

The active ingredients (silicate + wax additive) to binder weight-ratio is between 0.2 and 1.5, preferably 0.6 and 1.1. The binder may be a hygroscopic gum resin added in concentrations from 20 to 50 wt%, preferably between 30 and 40 wt%.

The wetting and dispersing agent may be a salt of unsaturated polyamine amides and low-molecular acidic polyesters such as Anti-Terra U100 from BYK added up to concentrations of 2 wt%.

The solvent should be capable of dissolving the binder, such as an aliphatic white spirit.

Preferably, the paint formulation of the present invention is applied to the surface by using a brush and roller in order to create a 50 - 200 micrometer layer on the treated surface.

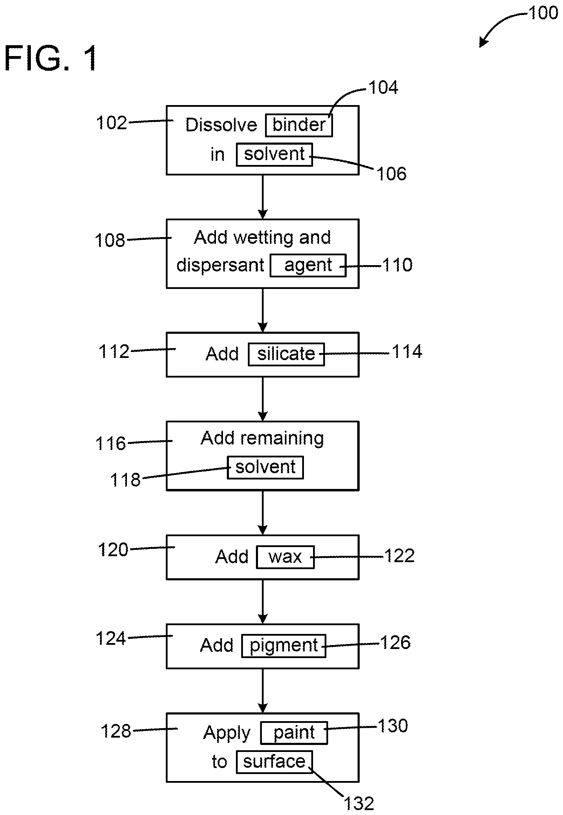

The paint formulation of the present invention may be formulated according to the processing steps 100 shown in Fig. 1. In a dissolve step 102, a binder 104 is dissolved in a solvent 106. The binder is often a crystallite that must be dissolved by the solvent to make the formulation suitable as a paint. In a first adding step 108, a wetting and dispersant agent 110 is added. In a second adding step 112, porous silicate 114 is added. In a third adding step 116, a remaining portion of the solvent 118 is added. In a fourth adding step 120, a suitable wax 122, such as lanolin, is added to dope the porous silicate 114 with the wax 122. In a fifth adding step 124, a suitable pigment 126 is added. In an application step 128, the formulated antifouling paint 130 is applied to a surface 132 to be treated.

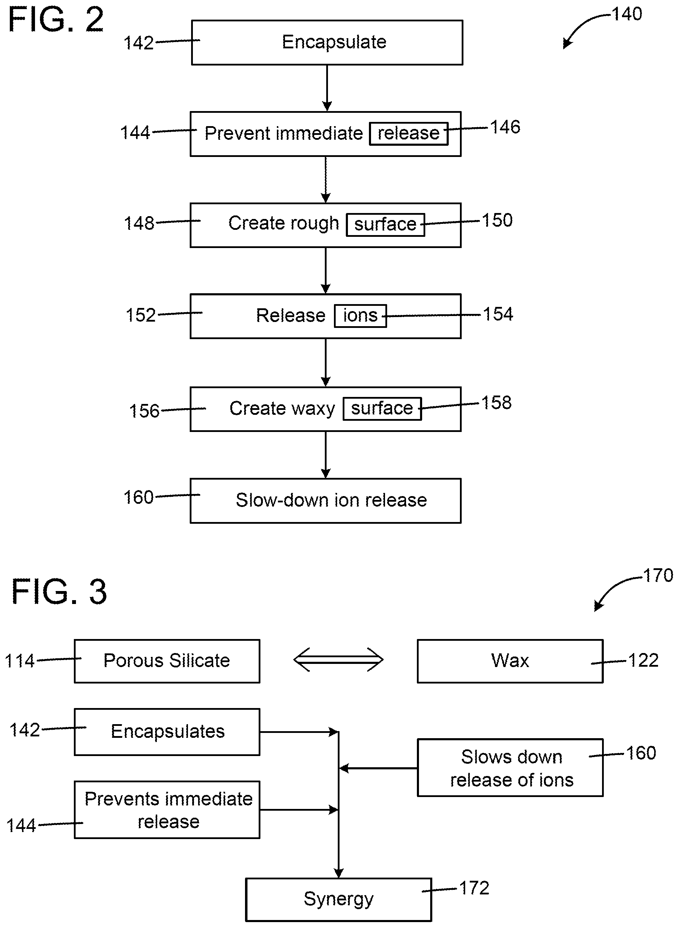

In operation, the important porous silicate 114 and wax 122 together provide synergistic functions 140 as outlined in Fig. 2. In an encapsulation step 142, the porous silicate 114 encapsulates the wax 122 so that the porous silicate 114 is loaded with the wax 122 which, preferably, is lanolin or any other suitable sterol-ester substance. It was surprisingly discovered how easily the porous silicate 114 is loaded with the wax 122 (especially lanolin) and how the silicate and wax interact to reach synergistic effects. It is also possible for binders, solvents and other substances, such as pigments, to penetrate into the hollow silicate 114. In a prevention step 144, the porous silicate 114 prevents the immediate release 146 of the wax 122. In a first creation step 148, the porous silicate 114 creates a rough surface 150. In a release step 152, the porous silicate 114 release ions 154. In a second creation step 156, the wax 122 creates a waxy surface 158. In a slow-down step 160, the wax 122 slows down the release of ions of the porous silicate 114.

The porous silicate 114 and the wax 122 together provide an important synergistic effect as shown in the schematic view 170 in Fig. 3. While the porous silicate 114 is loaded with the wax 122 so that the porous silicate 114 encapsulates the wax 122, as shown in step 142 of Fig. 2, and prevents the immediate release, as shown in step 144 of Fig. 2, of the wax 122, the wax 122 slows down the release of ions by the porous silicate 114, as shown in step 160 of Fig. 2, so that the effect of the release of ions is prolonged to create a synergy 172. This synergy is very important because it prolongs the antifouling effects of the paint 130 of the present invention.

It is to be understood that the porous silica can also be encapsulated or be used separately in combination with well-known traditional biocides such as copper-salt, zincoxide, capsaisin, Medetomidine and Econea.

By dramatically increasing the surface area of the paint-layer exposed to water, porous silica used in combination with traditional biocides reduces the amount of biocides necessary for good antifouling effect over time. In other words, because the biocides are used in combination with the porous silica, that has a very large surface, the amount of biocides needed is substantially smaller than when conventional techniques are used. Preferably, more than one weight percent but less than five weight percent of copper oxide may be used. See Sample 6 below where only 3% of copper salt is used with excellent anti-fouling results. This should be compared to about 50% of copper salt that is required in the conventional formulation shown in Sample 7. It was surprisingly discovered that a reduced amount of copper salts is required due to the strong synergistic antifouling effect of the silicate in conjunction with the biocide, plus the additional slower rate of release of copper salts from the porous matrix. Lanolin has previously been used but only as a plasticizer to avoid "mudcracking" of the paint-layer. Also, silica particles have been used as filler that has positive effects on the viscosity of the wet paint. In early experiments when developing the present invention, the formulations Sample 3 (only silica) and Sample 4 (only lanolin) were used as negative references (assuming they would not have any effect since they contained no active substances). Surprisingly, both these references showed some (if not much) effect. The synergistic effect of combining both silica and lanolin was unexpectedly great.

### Example of preparation of the paint of the present invention

The binder Bremazit 5015 is dissolved with a Dispermat equipment in a fraction of the solvent Asol D65 corresponding to 3/4 of its total weight, at a speed of about 2500 rpm for 30 minutes. The Dispermat stirring speed is then reduced to about 1500 rpm to reduce the heat generated and AntiTerra U100 is added. AntiTerra U100 is a suitable wetting and dispersant additive that, among other things, improves the dispersion of the added ingredients and prevents the formation of clusters. After one minute, the wetting and dispersant additive is fully blended and porous calcium magnesium silicate is progressively added. The remaining 1/4 fraction of the solvent is now added to reduce the viscosity. Pre-melted, at about 60 °C (140 °F), lanolin is added to the mixture. The carbon black pigment is preferably added before increasing the stirring speed to about 2500 rpm for about 20 minutes for best homogenization.

Both the primer and the antifouling top-coating can either be applied by brush, roller or spraying. Preferably, the primer is applied in a layer of about 80 µm on the surface to be treated that has been cleaned and rinsed with fresh water. The drying time of the primer varies with temperature but is usually between 6 - 8 hours. When the primer is completely dried, the anti-fouling top-coating of the paint of the present invention is applied in a layer of about 200 µm in thickness. The drying time of the antifouling paint varies with temperature but is usually between 8 - 16 hours. For the convenience of avoiding drying times longer than 16 hours the primer and the antifouling top-coating should not be applied when the temperature is below 7°C (45 °F).

To evaluate the performance of the different formulations, the coating was applied onto plates that were later immersed in a recognized high fouling area Tuticorin (India) for a period of 12 weeks. For comparison purposes a positive reference consisting of Hempel Mille Extra and a negative reference consisting of a formulation not containing any of the above mentioned additives.

A single layer of primer of ca. 80 µm was applied using an applicator of the mentioned thickness. When completely dried, a layer of the antifouling paint hereby described was applied with an applicator yielding a coating of ca. 200 µm in thickness.

After 12 weeks of testing in water, the plate was retrieved and the antifouling results are based on the area covered by marine organisms for the formulations hereby described in the different examples and those of the references. The test results are shown in the table below. The amount of fouling coverage is shown in the last row of the table above as a percentage of the total area treated.

### Examples of typical formulations and results

| Ingredient | S1 (wt%) | S2 (wt%) | S3 (wt%) | S4 (wt%) | S5 (wt%) | S6 (wt%) | S7* |
|---|---|---|---|---|---|---|---|
| Bremazit 5015 | 33.8 | 34.5 | 37.6 | 44 | 60 | 37 | |
| Asol 65 | 26 | 26.5 | 28.7 | 32 | 35 | 23,6 | |
| PCMS | 26.8 | 20.4 | 29.8 | -- | -- | 23 | |
| Lanolin | 10 | 15.2 | -- | 20 | -- | 10 | |
| CuSalt | -- | -- | -- | -- | -- | 3 | 50 |
| Anti-Terra U100 | 1.4 | 1.4 | 1.5 | 2 | 2.5 | 1,4 | |
| Carbon Black | 2 | 2 | 2.2 | 2 | 2.5 | 2 | |
| Fouling coverage after 12 weeks in sea water | 8% | 19% | 70% | 65% | 95% | 4% | 6% |

| | | | | | | | |
|---|---|---|---|---|---|---|---|
| * *Hempel Mille Extra ap. 50% copper* | | | | | | | |

As clearly shown in the table above, the fouling coverage by using only porous silicate (such as PCMS) as the active ingredient, shown in Sample 3, produced a fouling coverage of about 70% after 12 weeks in sea water. The fouling coverage by using only lanolin, shown in Sample 4, produced a fouling coverage of about 65% after 12 weeks in sea water. It is clear that the addition of either porous calcium magnesium silicate (Sample 3) or lanolin (Sample 4) enhance the antifouling effect compared to Sample 5 that does not contain any of the two ingredients. However, by combining the two active ingredients PCMS and lanolin a dramatic, surprising and unexpected improvement occurred. After 12 weeks a fouling coverage of only 8% was produced. This is significantly better than using the two active ingredients separately. The formulations of Samples 1 and 2 almost match the antifouling properties of the toxic Sample 7 (formulated with copper salts). It is important to note the formulation in Sample 1 is entirely based on the physical effect and does not release any toxic metals into the environment such as copper or tin i.e. Sample 1 does not rely on any chemical effect. Further, because the physical effect relies on impeding the adsorption of marine microorganisms by creating a "slippery" surface, the antifouling effect is improved with the relative motion between the coated substrate (e.g. a boat) and the surrounding waters. The field tests used as examples are conducted on stationary panels, it is likely that the paint formulation of the present invention matches or even outperforms the antifouling effect of the copper-based anti-fouling coating (such as the positive toxic reference in Sample 7) when applied to non-stationary marine vehicles. Due to the ability of porous silica to provide an increased surface area in which a biocide such as lanoline may or preferably reside and interact with the external particle surface, it was surprisingly discovered shown that the porous silica/biocide in combination dramatically lowers the amount of copper-salt needed to achieve sufficient anti-fouling effect, as shown in Sample 6, were the use of only 3% of copper-salt out-performs the commercially available paint formulations based on approximately 50% copper-salt, as shown in Sample 7.

In another preferred embodiment, the silica particles (or porous silicates) are not merely used as a carrier of antifouling agents. Instead, the silica particles are used as antifouling agents by themselves by taking advantage of the release of ions. Also, the inside of the porous silica particles are not preferably loaded with lanolin but the lanolin is instead added at the very end of the formulation. In other words, the silica particles are already loaded with binders and solvents when the lanolin is added to external surfaces of the silica particles.

The present invention provides several synergistic effects by having lanolin (other another suitable wax) encapsulate the silica particles, as shown below:
Effect A: The silica particles dissolve when in contact with seawater and release cations or ions which provide a mild antifouling effect;
Effect B: The lanolin disposed on the outside external surface of the silica particles provides an anti-fouling effect;
Effect C: The lanolin (or other wax) slows down the release of cations or ions due to the wax preventing (or slowing down) the contact of the silica particles with seawater; and Effect D: There is a possible slowing down of the release of any antifouling agent loaded inside the particles.

Another important feature of the present invention is that a copper (Cu) material, such as 3% Cu-oxide, may preferably be attached to the external large surface of the silica particles. It was surprisingly discovered that by increasing the exposed surface area of Cu-oxide and covering it with lanolin (or any other suitable wax) allows less use of Cu-oxide (approximately 3%) to obtain a comparable antifouling effect over time as traditional Cu-oxide paints that contain approximately 50% Cu-oxide.

In general, the silica particles dissolve relatively slowly when in contact with seawater (at pH 5-8.5). When the silica particles are gradually dissolved they release both ions which are in the wall of the silica particles (such as silicic acid, or other doped cations) and any antifouling agent that is loaded inside the silica particles. The latter may of course also be released by diffusion in a porous silicate material.

A very important feature of the present invention is that lanolin covers the external surface of the silica particles. Very little or no lanolin (or any other wax) is disposed inside the silica particles partly because the pores of the silica particles are too small to allow wax to penetrate the pores by simple diffusion during the preparation of the formulation. An important aspect of the present invention is that the binders/solvent are loaded into the silica particles in such a way that the silica particles can release ions from the inside anyway and that the lanolin is applied on the external surface of the silica particles in such a way that the release of ions is slowed down but not prevented. Another important aspect and surprising and unexpected discovery is that the lanolin substantially slows down the release of ions from the silica particles. Ions are electrically charged and thereby drawn to particles in sea water with the opposite electrical charge. The lanolin covering the silica particles merely act as a filter that controls this diffusion of ions. Trials were made by adding lanolin at different ratios to the silica particles. This may start at a ratio of 1:10 (by weight) and go all the way up to 1:1. The antifouling effect showed a surprising peak at the ratio 3.7:10 and slowly faded at ratios above. See S1 and S2 in the table above. So the synergetic effect is that untreated silica releases its ions too fast (approximately in 1 week) in order to offer an antifouling effect over time, while the lanolin controls the release so that a sufficient amount of ions are being released for the ions content of the silica particles to last longer.

The synergistic effect may be described like this. First, for the ions to leave the silicate, the silicate has to dissolve. This is because the ions are embedded in the silicate material. Second, the lanolin layer enclosing the silica particles is permeable to small or very small amounts of water in both directions so that the lanolin permits diffusion of water.

In this way, some water diffuses the lanolin layer and reaches the silicate and dissolves the silicate. The solvated silicate and the solvated ions diffuse the lanolin layer in the opposite direction (i.e. towards the sea water) and get into contact with the sea water and/or the early fouling organisms. When the solvated ions reach the outermost layer of lanolin and are exposed to early fouling organisms (larvae, etc), the ions (calcium and magnesium) affect or reduce their ability to bond to the surface and thus result in an antifouling mechanism. The effect of lanolin is thus to slow down the dissolution of the silicate but not to pause, stop or prevent such dissolution. In this way, the dissolution of ions is also slowed down by the lanolin layer that impregnates it. The thicker the lanolin layer, the slower the diffusion process.

While the present invention has been described in accordance with preferred compositions and embodiments, it is to be understood that certain substitutions and alterations may be made thereto without departing from the spirit and scope of the following claims.

## Claims

1. A method for treating a surface of a marine object exposed to seawater with an antifouling paint, comprising:
providing an antifouling paint (130) comprising a porous silicate (114) and a sterol-ester (122), the porous silicate (114) having a particle size of between 15 and 60 µm and being in a concentration of between 18 and 60 weight percent, the porous silicate comprising calcium, magnesium or calcium-magnesium;
partially loading an inside of the porous silicate (114) with binders and solvents,
the porous silicate releasing divalent cations from the inside of the porous silicate;
the porous silicate (114) releasing the divalent cations when in contact with seawater;
applying the sterol-ester (122) to an external surface of the porous silicate to encapsulate the porous silicate so that the sterol-ester slows down but not prevent the release of divalent cations from the porous silicate (114);
applying the antifouling paint to a surface (132) of the marine object; and
using the released divalent cations to provide an anti-fouling effect on the surface (132) of the marine object exposed to seawater.

2. The method of claim 1 wherein the method further comprises . the step of providing lanolin.

3. The method of claim 1 wherein the method further comprises the step of using the porous silicate to create a hydrophilic and acidic rough surface ((158) of the antifouling paint (130).

4. The method of claim 1 wherein the method further comprises the step of using lanolin to create a waxy surface (158) of the antifouling paint (130).

5. The method of claim 1 wherein the method further comprises the step of using the porous silicate in a concentration of between 28 and 52 weight percent.

6. The method of claim 1 wherein the method further comprises the step of using calcium in an atomic concentration of between 1 and 15% and magnesium of between 1 and 15% with respect to the porous silicate.

7. The method of claim 1 wherein the method further comprises using a porous silicate having a density of between 0.05 and 0.4 gram/cm³.

8. The method of claim 1 wherein the method further comprises the using a porous silicate having a surface area of between 50 and 300 m²/gram.

9. The method of claim 1 wherein the method further comprises the using a porous silicate having a pore size between 10 and 80 nm.

10. The method of claim 9 wherein the method further comprises the using a porous silicate having a pore size about 20 nm.

11. The method of claim 1 wherein the method further comprises using more than one weight percent but less than five weight percent copper oxide.

12. The method of claim 11 wherein the method further comprises using about three weight percent of copper oxide.

## Patentansprüche

1. Ein Verfahren für die Oberflächenbehandlung eines dem Meerwasser ausgesetzten Meeresgegenstands mit Hilfe eines Korrosionsschutzanstrichs, das Folgendes umfasst:
- Verwendung eines Korrosionsschutzanstrichs (130), der ein poröses Silikat (114), einen Sterolester (122) umfasst, wobei das poröse Silikat (114) Partikel mit Abmessungen zwischen 15 und 60 µ und einer Konzentration zwischen 18 und 60 Gew.-% aufweist, wobei das poröse Silikat Calcium, Magnesium oder Calciummagnesium umfasst, so dass das Innere des porösen Silikats (114) teilweise mit Bindemitteln und Lösungsmitteln geladen wird, wobei das poröse Silikat (114) zweiwertige Kationen aus dem Inneren des porösen Silikats freisetzt, wobei das poröse Silikat (114) die zweiwertigen Kationen freisetzt, wenn es mit Meerwasser in Berührung kommt,
- Auftragen von Sterolester (122) auf einer Außenfläche des porösen Silikats zum Einkapseln des porösen Silikats, so dass der Sterolester die Freisetzung der zweiwertigen Kationen bremst, ohne die Freisetzung der zweiwertigen Kationen aus dem porösen Silikat (114) zu verhindern,
- Auftragen des Korrosionsschutzanstrichs auf einer Fläche (132) des Meeresgegenstands, und
- Verwendung der freigesetzten zweiwertigen Kationen zum Erhalt einer Korrosionsschutzwirkung auf der dem Meerwasser ausgesetzten Fläche (132) des Meeresgegenstands.

2. Verfahren nach Anspruch 1, dem ferner Lanolin zugefügt wird.

3. Verfahren nach Anspruch 1, das ferner die Verwendung von porösem Silikat zur Bildung einer hydrophilen und sauren rauen Fläche auf dem Korrosionsschutzanstrich (130) umfasst.

4. Verfahren nach Anspruch 1, das ferner die Verwendung von Lanolin zum Erhalt einer wachsartigen Fläche (158) auf dem Korrosionsschutzanstrich (130) umfasst.

5. Verfahren nach Anspruch 1, das ferner die Verwendung von porösem Silikat in einer Konzentration von 28 bis 52 Gew.-% umfasst.

6. Verfahren nach Anspruch 1, das ferner die Verwendung von Calcium in einer atomaren Konzentration zwischen 1 und 15 % und Magnesium in einer Konzentration zwischen 1 und 15 % in Bezug auf das poröse Silikat umfasst.

7. Verfahren nach Anspruch 1, das ferner die Verwendung eines porösen Silikats mit einer Dichte zwischen 0,05 und 0,4 g/cm³ umfasst.

8. Verfahren nach Anspruch 1, das ferner die Verwendung eines porösen Silikats mit einer Oberfläche zwischen 50 und 300 m²/g umfasst.

9. Verfahren nach Anspruch 1, das ferner die Verwendung eines porösen Silikats mit Poren einer Größe zwischen 10 und 80 nm umfasst.

10. Verfahren nach Anspruch 9, das ferner die Verwendung eines porösen Silikats mit Poren der Größenordnung 20 nm umfasst.

11. Verfahren nach Anspruch 1, das ferner die Verwendung eines Kupferoxids von mehr als 1 Gew.-% aber weniger als 5 Gew.-% umfasst.

12. Verfahren nach Anspruch 11, das ferner die Verwendung eines Kupferoxids von etwa 3 Gew.-% umfasst.

## Revendications

1. Une méthode pour le traitement de surface d'un objet marin exposé à l'eau de mer au moyen d'une peinture anticorrosive, comportant :
- l'utilisation d'une peinture anticorrosive (130) comportant un silicate poreux (114), un ester de stérol (122), le silicate poreux (114) ayant des particules de dimensions comprises entre 15 et 60 micromètres et une concentration comprise entre 18 et 60 % en poids, le silicate poreux comportant du calcium, du magnésium ou un calcium-magnésium, chargeant partiellement l'intérieur du silicate poreux (114) avec des liants et des solvants, le silicate poreux (114) libérant des cations divalents de l'intérieur de silicate poreux, le silicate poreux (114) libérant les cations divalents lorsqu'il est en contact avec l'eau de mer,
- l'application de l'ester de stérol (122) à une surface externe du silicate poreux pour encapsuler le silicate poreux de telle sorte que l'ester de stérol ralentisse sans l'empêcher la libération des cations divalents à partir du silicate poreux (114),
- l'application de la peinture anticorrosive sur une surface (132) de l'objet marin, et
- l'utilisation des cations divalents libérés pour obtenir un effet anticorrosion sur la surface (132) de l'objet marin exposé à l'eau de mer.

2. La méthode selon la revendication 1, comportant par ailleurs l'apport de lanoline.

3. La méthode selon la revendication 1 comportant par ailleurs l'utilisation de silicate poreux pour créer une surface brute hydrophile et acide sur la peinture anticorrosive (130).

4. La méthode selon revendication 1, comportant par ailleurs l'utilisation de la lanoline pour obtenir une surface cireuse (158) sur la peinture anticorrosive (130).

5. La méthode selon la revendication 1, comportant par ailleurs l'utilisation du silicate poreux sous une concentration comprise entre 28 et 52 % en poids.

6. La méthode selon la revendication 1, comportant par ailleurs l'utilisation du calcium sous une concentration atomique comprise entre 1 et 15% et le magnésium sous une concentration comprise entre 1 et 15% par rapport au silicate poreux.

7. La méthode selon la revendication 1, comportant par ailleurs l'utilisation d'un silicate poreux présentant une densité comprise entre 0,05 et 0,4 grammes / cm3.

8. La méthode selon la revendication 1, comportant par ailleurs l'utilisation d'un silicate poreux comportant une surface comprise entre 50 et 300 m² par grammes.

9. La méthode selon la revendication 1, comportant par ailleurs l'utilisation d'un silicate poreux avec des pores d'une dimension comprise entre 10 et 80 nanomètres.

10. La méthode selon la revendication 9, comportant par ailleurs l'utilisation d'un silicate poreux avec des pores d'une dimension de l'ordre de 20 nanomètres.

11. La méthode selon la revendication 1, comportant par ailleurs l'utilisation d'un oxyde de cuivre de plus de 1% mais de moins de 5% en poids.

12. La méthode selon la revendication 11, comportant par ailleurs l'utilisation d'un oxyde de cuivre d'environ 3% en poids.
